(19) Europäisches Patentamt
European Patent Office
Office européen des brevets

(11) **EP 3 084 416 B1**

(12) **FASCICULE DE BREVET EUROPEEN**

(45) Date de publication et mention
de la délivrance du brevet:
**29.07.2020  Bulletin 2020/31**

(51) Int Cl.:
*G01N 29/04* (2006.01)   *G01S 15/89* (2006.01)
*G01N 29/06* (2006.01)   *G01S 7/52* (2006.01)
*G01N 29/07* (2006.01)

(21) Numéro de dépôt: **14827843.5**

(22) Date de dépôt: **15.12.2014**

(86) Numéro de dépôt international:
**PCT/FR2014/053347**

(87) Numéro de publication internationale:
**WO 2015/092250 (25.06.2015 Gazette 2015/25)**

(54) **PROCÉDÉ DE TRAITEMENT DE SIGNAUX ISSUS D'UNE ACQUISITION PAR SONDAGE ULTRASONORE, PROGRAMME D'ORDINATEUR ET DISPOSITIF DE SONDAGE À ULTRASONS CORRESPONDANTS**

VERFAHREN ZUR VERARBEITUNG VON SIGNALEN AUS EINER ULTRASCHALLSONDENERFASSUNG, ENTSPRECHENDES COMPUTERPROGRAMM UND ULTRASCHALLSONDENVORRICHTUNG

METHOD FOR PROCESSING SIGNALS FROM AN ULTRASOUND PROBE ACQUISITION, CORRESPONDING COMPUTER PROGRAM AND ULTRASOUND PROBE DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2013  FR 1363246**

(43) Date de publication de la demande:
**26.10.2016  Bulletin 2016/43**

(73) Titulaire: **Commissariat à l'Énergie Atomique et aux Énergies Alternatives 75015 Paris (FR)**

(72) Inventeurs:
• **ROBERT, Sébastien**
  **F-94270 Le Kremlin-Bicêtre (FR)**
• **LOPEZ VILLAVERDE, Eduardo-Rigoberto**
  **F-91300 Massy (FR)**
• **ALBERTINI, Julien**
  **F-92300 Levallois (FR)**
• **LEJEUNE, Léonard**
  **F-92120 Montrouge (FR)**

(74) Mandataire: **Bonnet, Michel**
  **Cabinet Bonnet**
  **93, rue Réaumur**
  **75002 Paris (FR)**

(56) Documents cités:
• **KOTOWICK K ET AL: "Adaptive compounding of synthetic aperture and compounded plane-wave imaging for fast ultrasonography", PROCEEDINGS - INTERNATIONAL SYMPOSIUM ON BIOMEDICAL IMAGING - ISBI 2013 - 2013 IEEE 10TH INTERNATIONAL SYMPOSIUM ON BIOMEDICAL IMAGING: FROM NANO TO MACRO 2013 IEEE COMPUTER SOCIETY USA, 11 avril 2013 (2013-04-11), pages 784-787, XP002729342, USA DOI: 10.1109/ISBI.2013.6556592**
• **FIDAHOUSSEN A ET AL: "Imaging of defects in several complex configurations by simulation-helped processing of ultrasonic array data", REVIEW OF QUANTITATIVE NONDESTRUCTIVE EVALUATION,, vol. 29, 1 janvier 2009 (2009-01-01), pages 847-854, XP009168271,**
• **P. CALMON ET AL: "MODEL BASED RECONSTRUCTION OF UT ARRAY DATA", AIP CONFERENCE PROCEEDINGS, vol. 975, 1 janvier 2008 (2008-01-01), pages 699-706, XP055073257, ISSN: 0094-243X, DOI: 10.1063/1.2902730**

- **MONTALDO G ET AL: "Coherent plane-wave compounding for very high frame rate ultrasonography and transient elastography", IEEE TRANSACTIONS ON ULTRASONICS, FERROELECTRICS AND FREQUENCY CONTROL, IEEE, US, vol. 56, no. 3, 1 mars 2009 (2009-03-01), pages 489-506, XP011255897, ISSN: 0885-3010**

**Description**

La présente invention concerne un procédé de traitement de signaux issus d'une acquisition par sondage ultrasonore pour réaliser de l'imagerie ultrasonore. Elle concerne également un programme d'ordinateur et un dispositif de sondage à ultrasons correspondants.

L'invention s'applique en particulier au domaine du contrôle non destructif par ultrasons, dans lequel l'acquisition de signaux ultrasonores permet de visualiser et détecter des défauts dans des structures, mais elle peut aussi s'appliquer à tout type d'imagerie échographique ultrasonore, notamment au domaine médical pour l'inspection de zones d'intérêt dans le corps humain ou animal.

Elle porte plus particulièrement sur un procédé de traitement acquérant les signaux ultrasonores de la façon suivante :

- commande de M transducteurs d'émission pour L émissions successives d'ondes ultrasonores vers une zone d'intérêt,
- commande de N transducteurs de réception de manière à recevoir simultanément et pendant une durée prédéterminée, pour chaque émission, N signaux temporels de mesure, mesurant en particulier des échos dus à des réflexions de l'émission considérée dans la zone d'intérêt,
- reconstitution d'une image de la zone d'intérêt par calcul, en chaque point d'une pluralité de points prédéterminés de cette zone d'intérêt, d'une valeur résultant d'un traitement d'au moins une partie des LxN signaux temporels de mesure reçus.

Une telle acquisition se fait généralement à l'aide d'un dispositif de sondage à capteur multiéléments, dans lequel chaque transducteur est à la fois émetteur et récepteur, une commutation entre ces deux modes pouvant être commandée électroniquement. Le capteur peut être mis au contact de l'objet à sonder ou à distance, mais dans ce dernier cas il doit être immergé pour assurer la transmission des ondes ultrasonores dans l'objet à sonder. Ce capteur peut être linéaire (1D) ou matriciel (2D), pour une imagerie 2D ou 3D, à éléments rigides ou flexibles.

Compte tenu des capacités de calcul actuelles des processeurs, la reconstitution de l'image de la zone d'intérêt par traitement des signaux temporels de mesure reçus peut être embarquée dans des instruments de contrôle pour des traitements en temps réel.

Dans la pratique et selon une première famille de techniques d'acquisition, l'acquisition ultrasonore précédemment définie, alors généralement qualifiée d'acquisition FMC (de l'anglais « Full Matrix Capture »), consiste à émettre une onde ultrasonore en excitant le premier transducteur d'émission et à recevoir les échos de cette émission avec l'ensemble des N transducteurs de réception, puis à commuter électroniquement sur l'ensemble des transducteurs d'émission pour les exciter successivement. Les transducteurs d'émission et de réception peuvent être localisés sur deux capteurs distincts, mais quand ce sont les mêmes transducteurs qui remplissent les fonctions d'émission et de réception, on obtient NxN signaux temporels de mesure.

Dans l'article de C. Holmes et al, intitulé « Post-processing of the full matrix of ultrasonic transmit-receive array data for non-destructive evaluation », publié dans NDT&E International 38 (disponible en ligne le 15 juin 2005), pages 701-711, les NxN signaux temporels de mesure obtenus sont exploités pour réaliser une focalisation synthétique de type « focalisation en tous points » qui permet d'obtenir une image haute résolution de la zone d'intérêt.

Plus précisément, cette focalisation synthétique consiste à calculer pour chaque point de la zone d'intérêt les temps de vol $T_{i,j}$ correspondant aux temps de parcours entre chaque transducteur d'émission (indice i) et chaque transducteur de réception (indice j) en passant par le point considéré (NxN temps de vol pour chaque point). La focalisation synthétique s'opère en sommant, pour chaque point de la zone d'intérêt, les amplitudes extraites des signaux temporels de mesure reçus, notés $K_{i,j}(t)$, aux temps t =$T_{i,j}$. L'amplitude A en un point *P* de l'image peut donc s'écrire :

$$A(P) = \left| \sum_{i=1}^{N} \sum_{j=1}^{N} K_{i,j}[T_{i,j}(P)] \right|$$

La reconstruction par focalisation en tous points peut se faire selon différents modes connus d'inspection par ultrasons : le mode direct où les temps de vol associés sont décrits ci-dessus, et d'autres modes plus complexes où les temps de vol incluent des réflexions multiples sur les frontières de la structure ainsi que des conversions de modes entre les ondes de polarisation longitudinale et celles de polarisation transversale. Pour une explication détaillée de ces autres modes plus complexes, on pourra notamment se reporter à l'article de A. Fidahoussen et al, intitulé « Imaging of defects in several complex configurations by simulation-helped processing of ultrasonic array data », publié dans Review of Quantitative Nondestructive Evaluation, vol. 29 (2009), pages 847-854.

Cependant, en présence de bruit électronique (dû au système d'acquisition) ou de bruit de structure (dû à la nature du matériau) sur les signaux de mesure, la reconstruction par focalisation en tous points peut fournir des images de qualité moindre comparativement aux méthodes échographiques classiques. L'imagerie par focalisation en tous points peut aussi être significativement dégradée lorsque le matériau est très atténuant, comme c'est par exemple le cas lors d'un contrôle de composites aéronautiques, de caoutchoucs ou de pneumatiques, etc. Cette atténuation diminue l'amplitude des ondes ultrasonores transmises dans le matériau au fur et à mesure de leur propagation de sorte que l'amplitude des échos reçus peut être inférieure au bruit électronique. L'avantage des méthodes échographiques classiques est que tous les transducteurs émettent de manière simultanée par application d'une loi de retards prédéterminée de manière à focaliser en un point donné. A l'inverse, dans le procédé d'acquisition FMC généralement mis en œuvre pour réaliser ensuite la reconstruction par focalisation synthétique, chaque émission est effectuée par un seul transducteur ce qui limite l'énergie transmise et la profondeur de pénétration des ondes dans la pièce inspectée. Cela se traduit finalement par une diminution du Rapport Signal sur Bruit (RSB) sur l'imagerie résultante, pouvant rendre difficile la détection et la caractérisation d'éventuels défauts. Cette diminution du RSB est d'autant plus forte que le bruit de structure ou électronique est important.

Une solution partielle à ce problème de diminution du RSB est apportée dans l'article de M. Karaman et al, intitulé « Synthetic aperture imaging for small scale systems », publié dans IEEE Transactions on Ultrasonics, Ferroelectrics, and Frequency Control, vol. 42, n°3 (mai 1995), pages 429-442.

Elle consiste à utiliser, pour chaque émission, non plus un transducteur mais plusieurs transducteurs adjacents. Une loi de retards est appliquée aux transducteurs d'émission adjacents sollicités pour qu'ils transmettent dans le milieu une onde ultrasonore sphérique, proche de celle qui serait émise par une source virtuelle ponctuelle située à une certaine distance du capteur. L'onde ultrasonore ainsi émise par la source virtuelle est plus intense puisque son énergie est proportionnelle à la racine carrée du nombre de transducteurs d'émission formant cette source. Le RSB est amélioré d'autant, en supposant que le bruit engendré est principalement du bruit blanc électronique. Le principe permet aussi de réduire le bruit de structure, mais dans une moindre mesure.

Cependant, dans le cas de pièces inspectées générant un bruit de structure important sur les signaux, l'amélioration de la qualité des images finalement obtenues par focalisation synthétique en tous points est plus limitée, l'augmentation du RSB est moindre et l'impact sur la détection n'est pas aussi positif qu'on pourrait l'espérer. Cette solution compense en partie le problème précité mais ne l'élimine pas. Par ailleurs, émettre au moyen de sources virtuelles ne permet pas de s'affranchir du problème que peuvent poser les artefacts de reconstruction essentiellement dus aux échos parasites tels que les échos de géométrie réfléchis par les interfaces de la pièce (bords, surface ou fond) ou les échos complexes incluant des réflexions multiples sur l'objet et les conversions de modes entre les ondes longitudinales et les ondes transversales à chaque interaction avec l'objet ou une interface de la pièce. Or ces artéfacts peuvent masquer l'écho réel d'un défaut ou constituer une fausse alarme. En outre, cette solution complique le mode d'acquisition et les algorithmes de reconstruction.

Un autre inconvénient majeur des techniques de reconstruction d'images telles que développées dans les articles précités est le nombre de tirs ultrasonores successifs requis et le nombre de signaux ultrasonores de mesure à traiter. Ce type de technique se prête donc finalement assez peu à des applications temps réel à grande vitesse, notamment lorsque le nombre de transducteurs de la sonde devient important.

Selon une deuxième famille de techniques d'acquisition, une alternative au principe d'acquisition ultrasonore détaillé ci-dessus consiste à émettre successivement des ondes ultrasonores planes présentant différents angles d'émission en excitant à chaque fois simultanément tous les transducteurs d'émission à l'aide de lois de retards adaptées et à recevoir les échos de ces émissions successives avec l'ensemble des N transducteurs de réception. Cette alternative, qualifiée généralement de « plane-wave compounding », est par exemple décrite dans l'article de G. Montaldo et al, intitulé « Coherent plane-wave compounding for very high frame rate ultrasonography and transient elastography », publié dans IEEE Transactions on Ultrasonics Ferroelectrics and Frequency Control, vol. 56, n° 3, pages 489-506, mars 2009, et dans l'article de K. Kotowick, intitulé "Adaptive compounding of synthetic aperture and compounded plane-wave imaging for fast ultrasonography", PROCEEDINGS - INTERNATIONAL SYMPOSIUM ON BIOMEDICAL IMAGING - ISBI 2013 - 2013 IEEE 10TH INTERNATIONAL SYMPOSIUM ON BIOMEDICAL IMAGING: FROM NANO TO MACRO 2013 IEEE COMPUTER SOCIETY USA, 11 avril 2013 (2013-04-11), pages 784-787.

La présente invention concerne plus précisément cette alternative, c'est-à-dire un procédé de traitement acquérant les signaux ultrasonores de la façon suivante :

- commande d'un réseau de M transducteurs d'émission pour L émissions successives d'ondes ultrasonores planes présentant L angles d'émission successifs différents dans L zones d'émission,
- commande d'un réseau de N transducteurs de réception de manière à recevoir simultanément et pendant une durée prédéterminée, pour chaque émission, N signaux temporels de mesure, mesurant en particulier des échos dus à des réflexions de l'émission considérée,
- reconstitution d'une zone imagée par calcul, en chaque point d'une pluralité de points prédéterminés de cette zone imagée, d'une valeur résultant d'un traitement d'au moins une partie des LxN signaux temporels de mesure reçus.

Cette deuxième famille de techniques d'acquisition est essentiellement envisagée dans le domaine médical et mise en œuvre dans certains échographes ultra-rapides permettant d'imager des cartographies de l'élasticité du corps humain. L'image résultante est de haute qualité et ne nécessite que quelques dizaines de tirs ultrasonores (généralement L est compris entre 10 et 30) pour un capteur de N = 128 transducteurs d'émission/réception, contre 128 tirs ou presque pour les techniques de la première famille. De plus, les algorithmes résultants et les applications associées se prêtent particulièrement bien à une parallélisation des calculs sur des processeurs de type GPU (de l'anglais « Graphic Processing Unit ») implantés dans les cartes graphiques des ordinateurs. Les performances d'un échographe implémentant une technique de « plane-wave compounding » peuvent ainsi atteindre en pratique 10 000 images/s. Un autre atout de cette deuxième famille de techniques d'acquisition réside dans le fait que chaque tir est réalisé en sollicitant tous les transducteurs d'émission de sorte que l'énergie émise est nettement plus élevée, rendant cette méthode moins sensible aux phénomènes d'atténuation, de bruit électronique ou de structure.

Selon cette deuxième famille de techniques d'acquisition et comme enseigné dans l'article de G. Montaldo et al précité, le traitement des LxN signaux temporels de mesure reçus pour constituer une image se fait ligne par ligne (une ligne étant définie comme une droite s'étendant perpendiculairement au réseau de transducteurs d'émission) par application de lois de retards en réception s'appliquant à chaque fois sur une petite portion seulement des transducteurs de réception, selon une technique bien connue sous le nom de « beamforming » ou de « Dynamic Depth Focusing » (connue sous le sigle DDF). Cela permet d'obtenir une image uniquement dans l'ouverture du capteur, cette ouverture étant définie par la distance entre les premier et dernier transducteurs. Le capteur utilisé doit donc avoir un grand nombre de transducteurs car la taille de l'image obtenue en dépendra.

D'une façon générale, les techniques de « plane-wave compounding » conviennent au domaine médical puisque, le plus souvent, les applications concernées consistent à réaliser une image centrée sous le capteur, en supposant que le milieu est homogène. Il n'y a pas ou peu de phénomènes de réfraction au passage de l'interface du milieu d'inspection, c'est-à-dire qu'il y a peu de contraste acoustique entre le tissu humain/animal et le gel couplant, ou l'eau si le corps est placé en immersion locale. Il n'y a en outre qu'un seul type d'ondes à prendre en compte dans l'imagerie, les ondes longitudinales ou de compression. De plus, le milieu à sonder est supposé semi-infini dans la plupart des applications médicales. Tout ceci explique en grande partie les cadences d'imagerie spectaculaires des échographes car les algorithmes s'en trouvent simplifiés.

En revanche, en contrôle non destructif, ces techniques ne donnent pas de résultats satisfaisants. En effet, dans ce domaine d'application, les échos peuvent provenir d'ondes longitudinales (identifiées par la lettre L) ou transversales (identifiées par la lettre T) pouvant inclure également des conversions L↔T entre ces deux types d'ondes lors d'une interaction avec un défaut ou une interface de la pièce. Le milieu d'inspection peut-être hétérogène ou anisotrope, par exemple dans le cas des aciers à gros grains, des soudures ou des matériaux composites. De plus, les interfaces du milieu d'inspection (i.e. le fond, la surface et les bords de pièces pouvant constituer des interfaces par exemple eau/acier souvent complexes) doivent pouvoir être prises en compte avec les phénomènes de réfraction et de réflexion qui en découlent. Par ailleurs, on cherche souvent à obtenir une image qui n'est pas nécessairement centrée sous le capteur mais qui s'étend latéralement au-delà de l'ouverture du capteur. Enfin, le point le plus différenciant avec le domaine médical concerne les caractéristiques des entités à imager. En contrôle non destructif, ces caractéristiques sont par exemple des défauts de type fissures. Celles-ci sont généralement des objets étendus, localisés à proximité d'une interface de la pièce et orientés perpendiculairement à cette interface (en général, il s'agit de la surface ou du fond d'une pièce). Pour ce type de défauts, l'approche est très différente de celle du domaine médical puisqu'il est avantageux d'exploiter une réflexion sur une interface de la pièce pour optimiser l'imagerie. En l'état actuel des connaissances, les techniques de « plane-wave compounding » précitées ne sont pas adaptées à l'imagerie de ce type de défauts.

Il peut ainsi être souhaité de prévoir un procédé de traitement de signaux ultrasonores qui permette de s'affranchir d'au moins une partie des problèmes et contraintes précités tout en exploitant l'acquisition avantageuse des signaux par émissions successives d'ondes planes.

Il est donc proposé un procédé de traitement de signaux issus d'une acquisition par sondage ultrasonore comportant les étapes suivantes :

- commande d'un réseau de M transducteurs d'émission pour L émissions successives d'ondes ultrasonores planes présentant L angles d'émission successifs différents dans L zones d'émission,
- commande d'un réseau de N transducteurs de réception de manière à recevoir simultanément et pendant une durée prédéterminée, pour chaque émission, N signaux temporels de mesure, mesurant en particulier des échos dus à des réflexions de l'émission considérée,
- reconstitution d'une zone imagée par calcul, en chaque point d'une pluralité de points prédéterminés de cette zone imagée, d'une valeur résultant d'un traitement d'au moins une partie des LxN signaux temporels de mesure reçus,

dans lequel la reconstitution de la zone imagée comporte les étapes suivantes, exécutées par un processeur pour chaque point de la zone imagée :

- détermination de L' émissions, L' ≤ L, parmi les L émissions successives, dont les zones d'émission incluent le point considéré,
- calcul de L'xN temps de vol, chaque temps de vol $t_{l,n}$ étant le temps mis par la l-ième onde plane dont la zone d'émission inclut le point considéré, où 1 ≤ l ≤ L', pour être reçue par le n-ième transducteur de réception, où 1 ≤ n ≤ N, en passant par le point considéré selon un mode de propagation prédéterminé, et
- sommation cohérente de L'xN valeurs instantanées prises respectivement, par les L'xN signaux temporels de mesure reçus correspondant aux L' émissions déterminées, aux L'xN temps de vol calculés.

Ainsi, en procédant de la sorte, le procédé proposé réalise une acquisition de type « plane-wave compounding », sans « beamforming » en réception. Il se réfère au principe de focalisation synthétique des acquisitions FMC, mais sans l'appliquer tel quel au « plane-wave compounding ». Ce principe est au contraire adapté de façon astucieuse pour à la fois tirer profit de la simplicité de la technique de « plane-wave compounding » en vue d'atteindre une cadence d'acquisition élevée et de la qualité d'image, en termes de résolution spatiale et de contraste, liée à une focalisation synthétisée en tous points de l'image souhaitée. Il permet en outre, grâce à cette focalisation synthétisée en tous points, d'obtenir une image susceptible de s'étendre au-delà de l'ouverture d'un capteur le mettant en œuvre. Enfin, l'utilisation d'une focalisation synthétisée en tous points rend le procédé compatible avec une imagerie de défauts de type fissures en exploitant les réflexions des ondes aux interfaces de la pièce contrôlée, comme cela est enseigné dans le document A. Fidahoussen et al cité précédemment.

De façon optionnelle, les transducteurs d'émission sont commandés à l'aide d'une loi de retards définie pour chacune des L émissions successives d'ondes ultrasonores planes, chaque loi de retards permettant d'engendrer une onde ultrasonore plane à un angle d'émission souhaité parmi les L angles d'émission successifs différents.

De façon optionnelle également, M = N et les transducteurs sont séquentiellement émetteurs et récepteurs.

De façon optionnelle également, les L angles d'émission successifs différents sont définis autour d'une direction moyenne non perpendiculaire au réseau de transducteurs d'émission.

De façon optionnelle également, pour chaque émission, c'est-à-dire pour chaque angle d'émission, le mode de propagation prédéterminé est choisi parmi l'un des modes suivants :

- un mode de propagation en trajet direct, avec ou sans conversion de mode Longitudinal↔Transversal, selon lequel l'onde plane émise est directement reçue par chaque point de la zone imagée et directement retournée vers les transducteurs de réception sans autre réflexion,
- un mode de propagation en écho de coin, avec ou sans conversions de mode Longitudinal↔Transversal, selon lequel l'onde émise subit une réflexion sur une surface prédéterminée de la zone imagée, soit entre les transducteurs d'émission et chaque point de la zone imagée, soit entre chaque point de la zone imagée et les transducteurs de réception, et
- un mode de propagation en trajet indirect, avec ou sans conversions de mode Longitudinal↔Transversal, selon lequel l'onde émise subit au moins deux réflexions contre au moins une surface prédéterminée de la zone imagée, au moins une fois entre les transducteurs d'émission et chaque point de la zone imagée et une autre fois entre chaque point de la zone imagée et les transducteurs de réception.

De façon optionnelle également, la zone imagée est incluse dans l'union des L zones d'émission, sa reconstitution comportant les étapes successives suivantes :

- initialisation de chaque point de la zone imagée à une valeur nulle,
- pour toute valeur d'un indice l variant de 1 à L et pour chaque point situé dans l'intersection de la zone imagée et de la l-ième zone d'émission :

    • calcul des N temps de vol $t_{l,n}$,
    • sommation cohérente des N valeurs instantanées prises respectivement, par les N signaux temporels de mesure reçus en réponse à la l-ième émission, aux N temps de vol calculés, et
    • ajout du résultat de cette sommation cohérente à la valeur du point considéré,

- calcul du module de la valeur finalement obtenue en chaque point de la zone imagée.

De façon optionnelle également, pour chaque émission, une apodisation des M signaux ultrasonores émis par les M transducteurs d'émission pour former une onde ultrasonore plane est réalisée à l'aide d'une fenêtre d'apodisation telle qu'une loi d'amplitude trapézoïdale, de Hamming ou de Blackman-Harris.

De façon optionnelle également, la zone imagée prend la forme d'une zone sectorielle délimitée par les extrémités des zones d'émission d'angles maximal et minimal.

Il est également proposé un programme d'ordinateur selon la revendication 9.

Il est également proposé un dispositif de sondage à ultrasons comportant :

- une sonde comprenant M transducteurs d'émission à ultrasons et N transducteurs de réception à ultrasons,
- des moyens de commande des M transducteurs d'émission pour L émissions successives d'ondes ultrasonores planes présentant L angles d'émission successifs différents dans L zones d'émission,
- des moyens de commande des N transducteurs de réception de manière à recevoir simultanément et pendant une durée prédéterminée, pour chaque émission, N signaux temporels de mesure, mesurant en particulier des échos dus à des réflexions de l'émission considérée, et
- un processeur de reconstitution d'une zone imagée par calcul, en chaque point d'une pluralité de points prédéterminés de cette zone imagée, d'une valeur résultant d'un traitement d'au moins une partie des LxN signaux temporels de mesure reçus,

dans lequel le processeur est en outre configuré pour effectuer les traitements suivants pour chaque point de la zone imagée :

- détermination de L' émissions, $L' \leq L$, parmi les L émissions successives, dont les zones d'émission incluent le point considéré,
- calcul de L'xN temps de vol, chaque temps de vol $t_{l,n}$ étant le temps mis par la l-ième onde plane dont la zone d'émission inclut le point considéré, où $1 \leq l \leq L'$, pour être reçue par le n-ième transducteur de réception, où $1 \leq n \leq N$, en passant par le point considéré selon un mode de propagation prédéterminé, et
- sommation cohérente de L'xN valeurs instantanées prises respectivement, par les L'xN signaux temporels de mesure reçus correspondant aux L' émissions déterminées, aux L'xN temps de vol calculés.

L'invention sera mieux comprise à l'aide de la description qui va suivre, donnée uniquement à titre d'exemple et faite en se référant aux dessins annexés dans lesquels :

- la figure 1 représente schématiquement la structure générale d'un dispositif de sondage à ultrasons selon un mode de réalisation de l'invention,
- la figure 2 illustre un principe d'émissions successives d'ondes ultrasonores planes mis en œuvre par le dispositif de la figure 1,
- les figures 3, 4 et 5 illustrent géométriquement des calculs de temps de vol réalisés dans la reconstitution d'une zone imagée par le dispositif de la figure 1 lorsqu'il met en œuvre le principe de la figure 2,
- la figure 6 illustre les étapes successives d'un procédé d'acquisition et de traitement de signaux ultrasonores mis en œuvre par le dispositif de la figure 1, selon un mode de réalisation de l'invention,
- la figure 7 illustre une première application possible du procédé de la figure 6,
- la figure 8 illustre une deuxième application possible du procédé de la figure 6, et
- les figures 9 et 10 représentent différents résultats possibles de l'application de la figure 8.

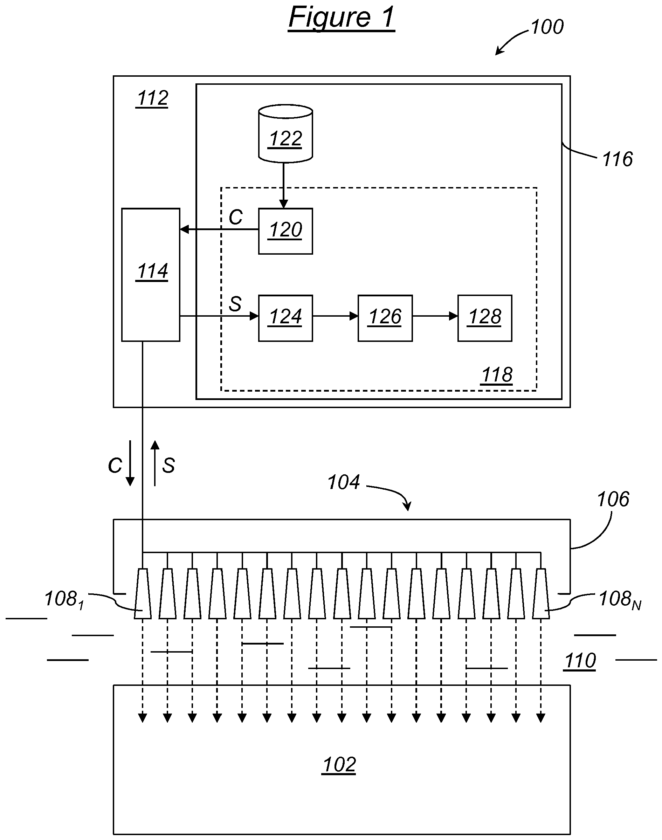

En référence à la figure 1, un dispositif de sondage 100 d'un objet 102 selon un mode de réalisation de l'invention comporte une sonde à ultrasons 104 présentant un boîtier 106, c'est-à-dire un élément de structure indéformable qui sert de référentiel attaché à la sonde 104, dans lequel sont disposés, par exemple linéairement ou matriciellement, N transducteurs $108_1$, ..., $108_N$ fixes ou mobiles disposés en réseau.

L'objet 102 est par exemple une pièce mécanique que l'on souhaite examiner par contrôle non destructif ou bien, dans un contexte médical, une partie de corps humain ou animal que l'on souhaite contrôler de manière non invasive. Dans le mode de réalisation de la figure 1, l'objet 102 est immergé dans un liquide, tel que de l'eau 110, et la sonde 104 est maintenue à distance de l'objet 102 afin que l'eau 110 les sépare. Mais dans un autre mode de réalisation équivalent, la sonde 104 pourrait être au contact direct de l'objet 102.

Les transducteurs $108_1$, ..., $108_N$ sont conçus pour émettre individuellement des ondes ultrasonores en direction de l'objet 102 en réponse à des signaux de commande identifiés sous la référence générale C, selon des directions principales parallèles les unes aux autres, indiquées par des flèches en pointillés sur la figure 1, et dans un plan principal qui est celui de la figure.

Les transducteurs $108_1$, ..., $108_N$ sont en outre conçus pour détecter des échos des ondes ultrasonores se réfléchissant sur et dans l'objet 102 et pour fournir des signaux de mesure identifiés sous la référence générale S et correspondant à ces échos. Ainsi, dans l'exemple non limitatif de la figure 1, les transducteurs $108_1$, ..., $108_N$ remplissent à la fois les fonctions d'émission et de réception, mais des récepteurs différents des émetteurs pourraient également être prévus dans des boîtiers différents et indépendants tout en restant conformes avec les principes de l'invention.

Le dispositif de sondage 100 comporte en outre un circuit électronique 112 de commande des transducteurs $108_1$, ...,$108_N$ de la sonde 104 et de traitement des signaux de mesure S. Ce circuit électronique 112 est connecté à la sonde 104 afin de lui transmettre les signaux de commande C et afin de recevoir les signaux de mesure S. Le circuit électronique 112 est par exemple celui d'un ordinateur. Il présente une unité centrale de traitement 114, telle qu'un microprocesseur conçu pour émettre vers la sonde 104 les signaux de commande C et pour recevoir de la sonde 104 les signaux de mesure S, et une mémoire 116 dans laquelle est notamment enregistré un programme d'ordinateur 118.

Le programme d'ordinateur 118 comporte tout d'abord des instructions 120 pour générer les signaux C de commande des transducteurs $108_1$, ...,$108_N$ et recevoir leurs échos. Ces instructions sont plus précisément programmées de manière à :

- activer les transducteurs $108_1$, ...,$108_N$ en tant qu'émetteurs pour L émissions successives d'ondes ultrasonores planes présentant L angles d'émission successifs différents dans L zones d'émission de l'objet 102,
- activer les transducteurs $108_1$, ...,$108_N$ en tant que récepteurs pour, suite à chaque émission, recevoir simultanément, par ces N récepteurs et pendant une durée prédéterminée de la profondeur d'inspection souhaitée, N signaux temporels de mesure, mesurant en particulier des échos dus à des réflexions de chaque émission considérée.

Les ondes ultrasonores planes sont obtenues à l'émission en appliquant aux transducteurs $108_1$, ...,$108_N$ des lois de retards enregistrées en mémoire 116 dans une base 122 de lois de retards. Chaque loi de retards définit des retards à appliquer aux transducteurs $108_1$, ...,$108_N$ en émission, de manière à engendrer une onde ultrasonore plane à un angle d'émission souhaité parmi les L angles d'émission successifs différents. Il est donc prévu autant de lois de retards que d'émissions successives souhaitées.

A la réception, l'ensemble S des LxN signaux temporels de mesure reçus par les transducteurs $108_1$, ...,$108_N$ est renvoyé par la sonde 104 à l'unité centrale de traitement 114.

Le programme d'ordinateur 118 comporte en outre des instructions 124 pour enregistrer ces signaux, $K_{l,n}(t)$ représentant le signal temporel de mesure reçu par le transducteur $108_n$ en réponse à la l-ième émission d'onde ultrasonore plane.

Le programme d'ordinateur 118 comporte en outre des instructions 126 pour reconstituer une zone imagée par calcul, en chaque point d'une pluralité de points prédéterminés de cette zone imagée, d'une valeur résultant d'un traitement d'au moins une partie des LxN signaux temporels de mesure reçus. Plus précisément, la zone imagée étant par exemple définie comme une image numérique constituée de pixels, les instructions 126 sont définies pour, en chaque pixel de cette image :

- déterminer L' émissions, L' ≤ L, parmi les L émissions successives, dont les zones d'émission incluent le pixel considéré,
- calculer L'xN temps de vol, chaque temps de vol $t_{l,n}$ étant le temps mis par la l-ième onde plane dont la zone d'émission inclut le pixel considéré, où 1 ≤ l ≤ L', pour être reçue par le n-ième transducteur de réception, où 1 ≤ n ≤ N, en passant par le pixel considéré selon un mode de propagation prédéterminé,
- sommer de façon cohérente les L'xN valeurs instantanées prises respectivement, par les L'xN signaux temporels de mesure reçus correspondant aux L' émissions déterminées, aux L'xN temps de vol calculés, et
- calculer le module de la valeur obtenue éventuellement pondérée par la valeur L'.

Enfin, le programme d'ordinateur 118 comporte des instructions 128 pour afficher l'image numérique obtenue sur un dispositif d'affichage non représenté.

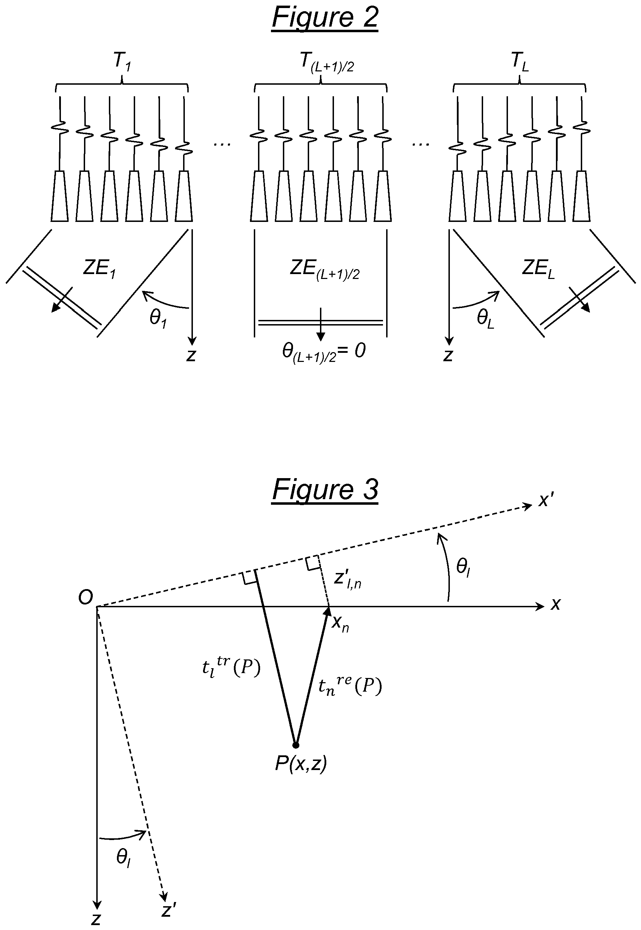

Comme illustré sur la figure 2 dans un cas où le nombre L d'émissions successives est impair et où les angles d'émissions se succèdent avec un pas constant dans un secteur angulaire symétrique par rapport à la direction z orthogonale au réseau de transducteurs $108_1$, ...,$108_N$, la première émission d'onde plane est associée à une loi de retards $T_1$ portant sur des impulsions émises par les transducteurs $108_1$, ...,$108_N$, permettant l'émission d'une onde plane d'angle d'émission $\theta_1$ par rapport à la direction z dans une première zone d'émission $ZE_1$ partiellement située en dehors de l'ouverture de la sonde 104. La (L+1)/2-ième émission d'onde plane est associée à une loi de retards $T_{(L+1)/2}$ uniforme pour l'émission d'une onde plane d'angle d'émission nul par rapport à la direction z dans une (L+1)/2-ième zone d'émission $ZE_{(L+1)/2}$ couvrant l'ouverture de la sonde 104. Enfin, la dernière émission d'onde plane est associée à une loi de retards $T_L$ permettant l'émission d'une onde plane d'angle d'émission $\theta_L = -\theta_1$ par rapport à la direction z dans une dernière zone d'émission $ZE_L$ partiellement située en dehors de l'ouverture de la sonde 104. D'une façon générale, la l-ième émission d'onde plane est associée à une loi de retards $T_l$ permettant l'émission d'une onde plane d'angle d'émission $\theta_l = \theta_1 + (l - 1).(\theta_L - \theta_1)/(L - 1)$ par rapport à la direction z.

De manière à améliorer la qualité des signaux de mesure exploités pour reconstituer la zone imagée, il est en outre possible d'appliquer une apodisation des signaux ultrasonores émis par les transducteurs $108_1$, ...,$108_N$ pour

former une onde ultrasonore plane de meilleure qualité, sans distorsion subie à cause des effets de bords. Une telle apodisation est réalisée à l'occasion de chaque émission spatialement sur l'ensemble des transducteurs à l'aide d'une fenêtre d'apodisation telle qu'une loi d'amplitude trapézoïdale, de Hamming ou de Blackman-Harris. Elle a pour résultat de fournir une meilleure définition des zones d'émission successives.

Compte tenu de la technique d'acquisition employée, la zone à imager doit être contenue dans l'union des L zones d'émission successives. Il en résulte que cette zone peut s'étendre au-delà de l'ouverture de la sonde 104, comme cela est visible sur la figure 2. En particulier, la zone imagée peut prendre la forme d'une zone sectorielle délimitée par les extrémités des zones d'émission d'angles maximal et minimal. On peut ainsi obtenir une image de type S-scan.

En référence à la figure 3 illustrant une application 2D de l'invention, pour la l-ième émission d'onde ultrasonore plane d'angle d'émission $\theta_l$, le temps de vol en trajet direct $t_{l,n}(P)$ relatif à un point P de coordonnées (x, z) dans le référentiel (O, x, z) lié au plan de la zone à imager où l'axe (O, x) est l'axe du réseau de transducteurs $108_1$, ...,$108_N$, et relatif au transducteur $108_n$ dont les coordonnées sont ($x_n$, 0) dans le même référentiel (O, x, z), se décompose de la façon suivante :

$$t_{l,n}(P) = t_l^{tr}(P) + t_n^{re}(P)$$

où $t_l^{tr}(P)$ est le temps de vol en émission entre le plan (O, x') d'émission de l'onde plane et le point P et $t_n^{re}(P)$ le temps de vol en réception entre le point P et le transducteur $108_n$.

Par calcul géométrique, le temps de vol en émission s'exprime de la façon suivante :

$$t_l^{tr}(P) = \frac{x.\sin(\theta_l) + z.\cos(\theta_l)}{c}$$

où c est la vitesse de propagation de l'onde plane dans le milieu considéré (en supposant qu'il n'y a pas de changement de milieu, ce qui est vérifié dans des cas de contrôle non destructif au contact). On note que ce temps de vol en émission pour le point P ne dépend pas des transducteurs $108_1$, ...,$108_N$, mais uniquement de l'angle d'émission $\theta_l$.

Par calcul géométrique également, le temps de vol en réception s'exprime de la façon suivante :

$$t_n^{re}(P) = \frac{\sqrt{(x_n - x)^2 + z^2}}{c}$$

où l'on remarque que ce temps de vol en réception pour le point P ne dépend que des transducteurs $108_1$, ...,$108_N$, mais pas de l'angle d'émission $\theta_l$.

Le temps de vol total s'exprime donc de la façon suivante :

$$t_{l,n}(P) = \frac{x.\sin(\theta_l) + z.\cos(\theta_l)}{c} + \frac{\sqrt{(x_n - x)^2 + z^2}}{c}$$

Pour sommer de façon cohérente L'xN valeurs instantanées prises respectivement, par L'xN signaux temporels de mesure reçus correspondant à L' émissions déterminées contribuant à la zone imagée au point P, aux L'xN temps de vol tels que calculés précédemment, il convient en outre en pratique pour des soucis de recalage temporel d'appliquer une constante $\tau_l^{tr}$ propre à chaque émission, dont la valeur s'exprime de la façon suivante :

$$\tau_l^{tr} = \frac{\max_n(z'_{l,n})}{2.c}$$

où $z'_{l,n}$ représente la distance entre le transducteur $108_n$ et l'axe du réseau de transducteurs (O, x') virtuellement décalé angulairement de l'axe (O, x) d'un angle égal à $\theta_l$. Cette distance peut se calculer selon la formule suivante :

$$z'_{l,n} = x_n.\sin(\theta_l) - \min_n[x_n.\sin(\theta_l)]$$

Le calcul précédent, et en particulier la valeur $\min_n[x_n.\sin(\theta_l)]$, assure que les retards appliqués dans les lois de retards restent toujours positifs, même lorsque l'angle $\theta_l$ est négatif. Par ailleurs, dans le cas d'une pièce inspectée de surface plane, la constante $\tau_l^{tr}$ propre à chaque émission correspond au retard moyen de la loi de retards appliquée à la l-ième émission ou, de façon équivalente, à la moitié du retard maximal.

Il en résulte que le module de la sommation cohérente définie précédemment, impliquant les L'xN signaux temporels de mesure contribuant à la zone imagée au point P, peut s'exprimer de la façon suivante :

$$A(P) = \left| \sum_{l=1}^{L'} \sum_{n=1}^{N} K_{l,n}[t_{l,n}(P) + \tau_l^{tr}] \right|$$

En pratique, pour obtenir l'enveloppe de l'image, ce sont plutôt les signaux analytiques que l'on somme, à l'aide notamment des transformées de Hilbert $H_{l,n}(t)$ des signaux $K_{l,n}(t)$. Le calcul précédent devient alors plus précisément :

$$A_{env}(P) = \left| \sum_{l=1}^{L'} \sum_{n=1}^{N} (K_{l,n}[t_{l,n}(P) + \tau_l^{tr}] + H_{l,n}[t_{l,n}(P) + \tau_l^{tr}]) \right|$$

On remarque que conformément à ce calcul s'apparentant à une focalisation en tous points, aucune loi de retards n'est appliquée en réception.

L'avantage de reconstituer la zone à imager par une telle technique basée sur des calculs de temps de vol en chaque point est qu'il est possible de tenir compte de différentes configurations et modes de propagation des ondes ultrasonores. Ainsi par exemple, dans les calculs précédents, il a été considéré par souci de simplicité que le mode de propagation des ondes ultrasonores était direct, sans changement de milieu de propagation (sondage au contact de l'objet à inspecter) et sans conversion de polarisation des ondes émises, c'est-à-dire que chaque onde plane émise est directement reçue par chaque point de la zone imagée et directement retournée vers les transducteurs $108_1$, ...,$108_N$ sans autre réflexion.

Mais d'autres hypothèses pourraient être faites et il suffirait alors d'adapter le calcul des temps de vol :

- le contrôle de l'objet considéré pourrait se faire en immersion sans contact, avec une surface d'objet plus ou moins complexe,
- le mode de propagation des ondes ultrasonores peut être en écho de coin, notamment au voisinage d'un défaut de type fissure et selon une certaine incidence de l'onde plane : dans ce cas, l'onde plane émise subit une réflexion contre une surface prédéterminée de la zone imagée, par exemple le fond de l'objet, soit entre les transducteurs $108_1$, ...,$108_N$ et chaque point de la zone imagée, soit entre chaque point de la zone imagée et les transducteurs $108_1$, ...,$108_N$,
- le mode de propagation des ondes ultrasonores peut être en trajet indirect, notamment également au voisinage d'un défaut de type fissure et selon une certaine incidence de l'onde plane : dans ce cas, l'onde plane émise subit au moins deux réflexions contre au moins une surface prédéterminée de la zone imagée, par exemple le fond de l'objet, au moins une fois entre les transducteurs $108_1$, ...,$108_N$ et chaque point de la zone imagée et une autre fois entre chaque point de la zone imagée et les transducteurs $108_1$, ...,$108_N$,
- quel que soit le mode de propagation, la polarisation longitudinale ou transversale des ondes ultrasonores peut varier à l'occasion d'une réflexion : une onde transversale peut devenir longitudinale et inversement, cette conversion ayant un impact sur la vitesse de propagation.

Les hypothèses précitées peuvent en outre se combiner.

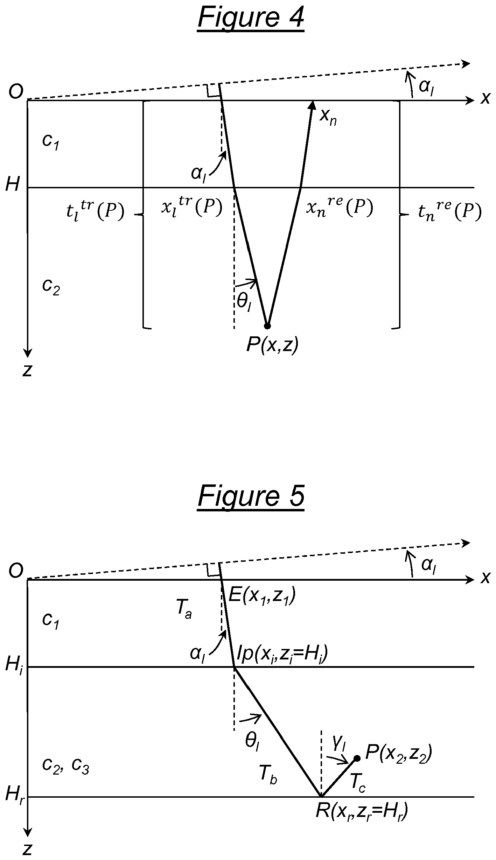

A titre d'exemple, la figure 4 illustre un contrôle en immersion sans contact selon lequel la propagation se fait, en mode direct, dans un premier milieu à la vitesse $c_1$, par exemple de l'eau, puis dans un deuxième milieu à la vitesse $c_2$, par exemple le matériau (acier, ...) de l'objet inspecté. Les deux milieux sont dans ce cas particulier délimités par la surface plane de l'objet se situant à une distance H de l'axe (O, x) du réseau de transducteurs $108_1$, ...,$108_N$.

En reprenant les notations de la figure 3 et y ajoutant celles de la figure 4, il convient de prendre en compte le calcul des points d'impact $x_l^{tr}(P)$ et $x_n^{re}(P)$ sur la surface plane de l'objet pour calculer le temps de vol total $t_{l,n}(P)$.

En émettant une onde plane dans le premier milieu, au-dessus de la surface plane de l'objet, avec un angle d'incidence $\alpha_l$, on peut en déduire l'angle d'incidence $\theta_l$ de l'onde plane dans le deuxième milieu sous la surface de l'objet par la loi de Snell-Descartes qui s'écrit :

$$\theta_l = \sin^{-1}\left(\frac{c_2}{c_1}\sin(\alpha_l)\right)$$

Connaissant ensuite les coordonnées x et z du point de focalisation P dans l'objet inspecté, on en déduit l'abscisse $x_l^{tr}(P)$ du point d'impact sur la surface associé au trajet en émission :

$$x_l^{tr}(P) = x - (z - H).\tan(\theta_l)$$

Par suite, le temps de vol en émission jusqu'au point P s'écrit :

$$t_l^{tr}(P) = \frac{\sqrt{H^2 + [x_l^{tr}(P)]^2}}{c_1} + \frac{\left(x - x_l^{tr}(P)\right)\sin\theta_l + (z - H)\cos\theta_l}{c_2}$$

Comme précédemment, on note que ce temps de vol en émission pour le point P ne dépend pas des transducteurs $108_1$, ...,$108_N$, mais uniquement de l'angle d'émission $\theta_l$.

En réception, de façon analogue :

$$t_n^{re}(P) = \frac{\sqrt{H^2 + [x_n^{re}(P)]^2}}{c_1} + \frac{\sqrt{(x_n^{re}(P) - x)^2 + (z - H)^2}}{c_2}$$

où l'abscisse $x_n^{re}(P)$ du point d'impact en réception est déterminée sur la base du principe de Fermat selon lequel le trajet retour entre le point P et le récepteur $108_n$ doit correspondre au trajet le plus court. Dans le cas d'une pièce plane, le principe aboutit à la recherche des zéros d'une fonction. Les méthodes généralement utilisées pour résoudre une telle recherche de zéros sont diverses : méthode de Newton-Raphson, méthode de Ferrari, méthode de Laguerre, méthode de descente de gradient, etc. Les méthodes de Newton-Raphson et de descente de gradient sont les plus intéressantes car elles restent valides pour des géométries complexes de la surface. Il existe en particulier de nombreux documents dans l'état de la technique sur la recherche de trajets les plus courts et sur le calcul de points d'impact. Ces méthodes ne seront donc pas rappelées.

Comme précédemment, on montre que le temps de vol en réception pour le point P ne dépend que des transducteurs $108_1$, ...,$108_N$, mais pas de l'angle d'incidence $\theta_l$.

A titre d'exemple supplémentaire, la figure 5 illustre un contrôle en immersion sans contact selon lequel la propagation se fait, en mode en écho de coin, dans un premier milieu à la vitesse $c_1$, par exemple de l'eau, puis dans un deuxième milieu, par exemple le matériau (acier, ...) de l'objet inspecté. Dans le deuxième milieu, la propagation se fait à la vitesse $c_2$ pour les ondes longitudinales et à la vitesse $c_3$ pour les ondes transversales. Les deux milieux sont dans ce cas particulier délimités par la surface plane de l'objet se situant à une distance $H_i$ de l'axe (O, x) du réseau de transducteurs $108_1$, ...,$108_N$. L'objet présente en outre un fond de pièce plan, à une distance $H_r$ de l'axe (O, x), contre lequel rebondit une onde incidente plane selon le principe de la propagation en écho de coin. Seul le trajet incident au point P est illustré, le trajet retour étant similaire à celui de l'exemple précédent.

Le trajet incident de la l-ième émission d'onde plane se décompose ainsi en trois parties :

- une première partie $T_a$ entre son point d'émission théorique E de coordonnées $(x_1, z_1)$ sur l'axe (O, x) et un point d'impact Ip de coordonnées $(x_i, z_i=H_i)$ à l'interface des deux milieux, orientée selon un angle $\alpha_l$ par rapport à la direction (O, z),
- une deuxième partie $T_b$ entre le point d'impact Ip et un point de réflexion R de coordonnées $(x_r, z_r=H_r)$ au fond de l'objet, orientée selon l'angle $\theta_l$ par rapport à la direction (O, z), et
- une troisième partie $T_c$ entre le point de réflexion R et le point P de coordonnées notées $(x_2, z_2)$, orientée selon un angle $\gamma_l$ par rapport à la direction (O, z).

On suppose par ailleurs que l'onde est longitudinale sur les trajets $T_a$ et $T_b$, puis transversale sur le trajet $T_c$, une conversion de polarisation ayant lieu à l'occasion du rebond contre le fond de l'objet.

Conformément à la loi de Snell-Descartes, le principe de réfraction doit être vérifié au point Ip et le principe de réflexion au point R. Cela donne le système d'équations suivant :

$$\begin{cases} \dfrac{\sin(\alpha_l)}{c_1} = \dfrac{\sin(\theta_l)}{c_2} \\ \dfrac{\sin(\theta_l)}{c_2} = \dfrac{\sin(\gamma_l)}{c_3} \end{cases}$$

Pour poser le problème en coordonnées cartésiennes, on exprime les sinus en fonction des coordonnées des points E, Ip, R et P :

$$\sin(\alpha_l) = \frac{(x_i - x_1)}{\sqrt{(x_i - x_1)^2 + (H_i - z_1)^2}}$$

$$\sin(\theta_l) = \frac{(x_r - x_i)}{\sqrt{(x_r - x_i)^2 + (H_r - H_i)^2}}$$

$$\sin(\gamma_l) = \frac{(x_2 - x_r)}{\sqrt{(x_2 - x_r)^2 + (z_2 - H_r)^2}}$$

Le système d'équations précédent peut alors s'exprimer de la façon suivante :

$$\begin{cases} f_1 : c_2(x_i - x_1)\sqrt{(x_r - x_i)^2 + (H_r - H_i)^2} - c_1(x_r - x_i)\sqrt{(x_i - x_1)^2 + (H_i - z_1)^2} = 0 \\ f_2 : c_3(x_r - x_i)\sqrt{(x_2 - x_r)^2 + (z_2 - H_r)^2} - c_2(x_2 - x_r)\sqrt{(x_r - x_i)^2 + (H_r - H_i)^2} = 0 \end{cases}$$

Ce système de deux équations non linéaires à deux inconnues, $x_i$ et $x_r$, se résout de façon classique à l'aide de la méthode de Newton-Raphson. Il permet de déterminer les points Ip et R puis d'en déduire le temps de vol en émission $t_l^{tr}(P)$.

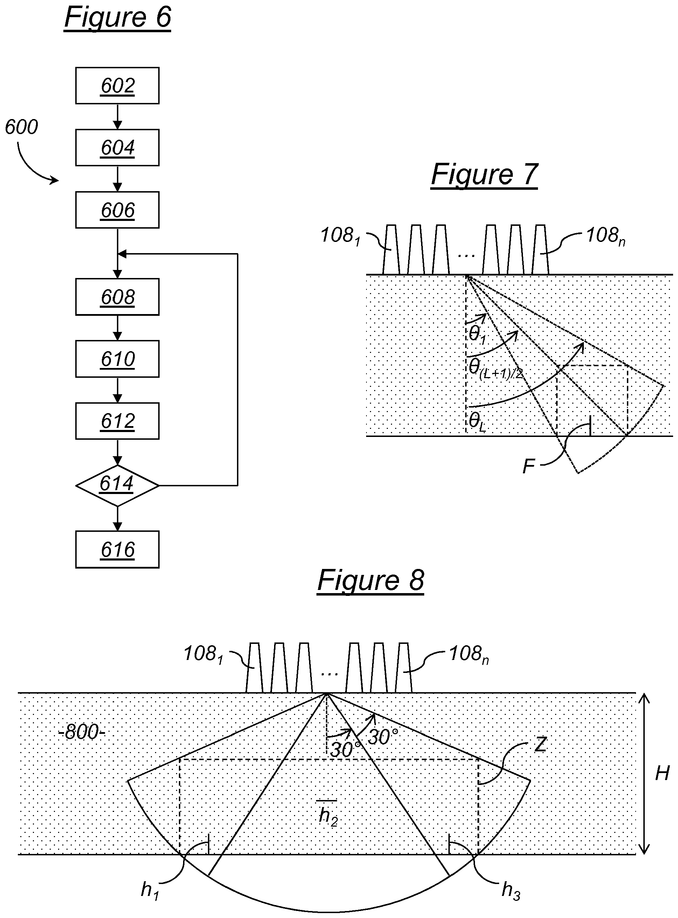

En référence à la figure 6, un exemple de procédé 600 d'acquisition et de traitement de signaux ultrasonores que peut mettre en œuvre le dispositif 100 de la figure 1 va à présent être décrit selon un mode de réalisation préféré de l'invention.

Au cours d'une étape 602, l'unité de traitement 114 exécutant les instructions 120 commande les séquences d'émissions et de réceptions des transducteurs $108_1$, ...,$108_N$ pour l'acquisition des signaux de mesure $K_{l,n}(t)$.

Ces séquences sont au nombre de L, nombre entier pouvant être très inférieur au nombre N de transducteurs $108_1$, ...,$108_N$. Après chaque tir, les signaux sont reçus sur l'ensemble des N transducteurs, numérisés et transmis au circuit électronique 112.

Au cours d'une étape 604, l'unité de traitement 114 exécutant les instructions 124 enregistre les signaux de mesure $K_{l,n}(t)$, ces signaux étant numérisés pour faciliter leur traitement ultérieur. Les étapes 602 et 604 peuvent être exécutées simultanément, c'est-à-dire qu'il n'est pas nécessaire d'attendre que tous les tirs soient réalisés pour commencer à enregistrer les signaux de mesure et reconstituer une image.

Au cours d'une étape suivante 606, l'unité de traitement 114 exécutant les instructions 126 initialise chaque pixel de la zone à imager, choisie dans l'union des L zones d'émission, à une valeur nulle. Par ailleurs, un indice l destiné à varier de 1 à L est initialisé à 1. Cette étape peut être exécutée indépendamment des étapes 602 et 604, avant, pendant ou après.

Au cours d'une étape 608 suivante, pour chaque pixel de la zone à imager situé dans la l-ième zone d'émission, les N temps de vol $t_{l,n}$, $1 \leq n \leq N$, sont calculés selon un mode de propagation choisi spécifiquement pour l'angle d'émission $\theta_l$, conformément par exemple à l'un des calculs présentés précédemment. Il apparaît donc que plusieurs modes de propagation avec ou sans conversions de polarisation peuvent être respectivement choisis pour les L émissions successives. L'invention permet donc de fusionner plusieurs modes de reconstruction ultrasonore au sein de d'une même zone à imager.

Au cours d'une étape 610, pour chaque pixel de la zone à imager situé dans la l-ième zone d'émission, les N valeurs instantanées prises respectivement, par les N signaux temporels de mesure reçus en réponse à la l-ième émission, aux N temps de vol calculés précédemment, sont sommées conformément à l'opération de sommation cohérente suivante :

$$A_l(P) = \sum_{n=1}^{N} \left( K_{l,n}\left[t_{l,n}(P) + \tau_l^{tr}\right] + H_{l,n}\left[t_{l,n}(P) + \tau_l^{tr}\right] \right)$$

où $A_l(P)$ est l'amplitude du pixel P pour la l-ième émission.

Au cours d'une étape 612, pour chaque pixel de la zone à imager situé dans la l-ième zone d'émission, le résultat de la sommation cohérente est ajouté à la valeur courante du pixel considéré et l'indice l est incrémenté d'une unité

Ensuite, au cours d'une étape de test 614, si l est strictement inférieur à L, le procédé retourne à l'étape 608. Sinon, il passe à une dernière étape 616.

Au cours de la dernière étape 616, le module de la valeur finalement obtenue en chaque point de la zone imagée est calculé, de sorte que l'on obtient bien, en chaque pixel P, la valeur $A_{env}(P)$ définie précédemment :

$$A_{env}(P) = \left| \sum_{l=1}^{L} A_l(P) \right|$$

On peut éventuellement procéder à une pondération des valeurs des pixels par le nombre de tirs qui ont contribué à la valeur de chacun d'eux, sachant que les pixels proches de l'angle moyen des émissions reçoivent davantage d'ondes ultrasonores que ceux qui en sont plus éloignés.

Chaque boucle d'étapes 608, 610 et 612 des itérations sur l'indice l peut être exécutée parallèlement aux étapes 602 et 604 puisque le traitement réalisé dans chacune de ces boucles ne dépend que des résultats d'un seul tir ultrasonore. Il n'est en particulier pas nécessaire d'attendre que tous les tirs soient réalisés pour commencer les calculs du processus itératif 608-610-612-614. Les étapes 608, 610, 612, 614 et 616 sont par ailleurs, comme l'étape 606, exécutées par l'unité de traitement 114 à l'aide des instructions 126.

Au cours de la dernière étape 616 également, l'unité de traitement 114 exécutant les instructions 128 affiche l'image résultante.

Grâce à la mise en œuvre de ce mode de réalisation préféré, la zone imagée peut être reconstituée progressivement, angle par angle, en ne mettant à jour pour chaque angle de tir que les valeurs de pixels situés dans la zone de tir, les contours de cette zone étant d'autant mieux définis qu'une apodisation performante a été réalisée à l'émission de l'onde ultrasonore plane. Il est donc inutile de procéder à des calculs pour la totalité des pixels de l'image finale à chaque tir. Ce principe est particulièrement avantageux lorsque l'image finale s'étend largement au-delà des dimensions du capteur.

Comme illustré sur la figure 7, l'un des avantages de l'invention, c'est aussi que les L angles d'émission successifs différents $\theta_1$ à $\theta_L$ peuvent être définis autour d'une direction moyenne $\theta_{(L+1)/2}$ non perpendiculaire au réseau de transducteurs $108_1$, ...,$108_N$. En particulier, lorsqu'il s'agit de détecter des défauts tels qu'une fissure F disposée au fond d'un objet à inspecter en contrôle non destructif, cette fissure F étant en outre perpendiculaire au réseau de transducteurs, il est préférable de décaler latéralement la zone à inspecter par rapport à la sonde 104 et d'émettre autour d'une moyenne de 45° par exemple. Ainsi, la fissure devient plus visible. Elle est par ailleurs avantageusement détectée sur toute sa longueur en choisissant un mode de propagation en écho de coin dans son voisinage avec une éventuelle conversion de polarisation, ce qui est également possible dans la mise en œuvre de l'invention comme cela a été vu précédemment. La zone à inspecter peut même être décalée au point de sortir complètement de l'ouverture de la sonde 104, ce qui n'est pas possible dans les méthodes conventionnelles de « beamforming ».

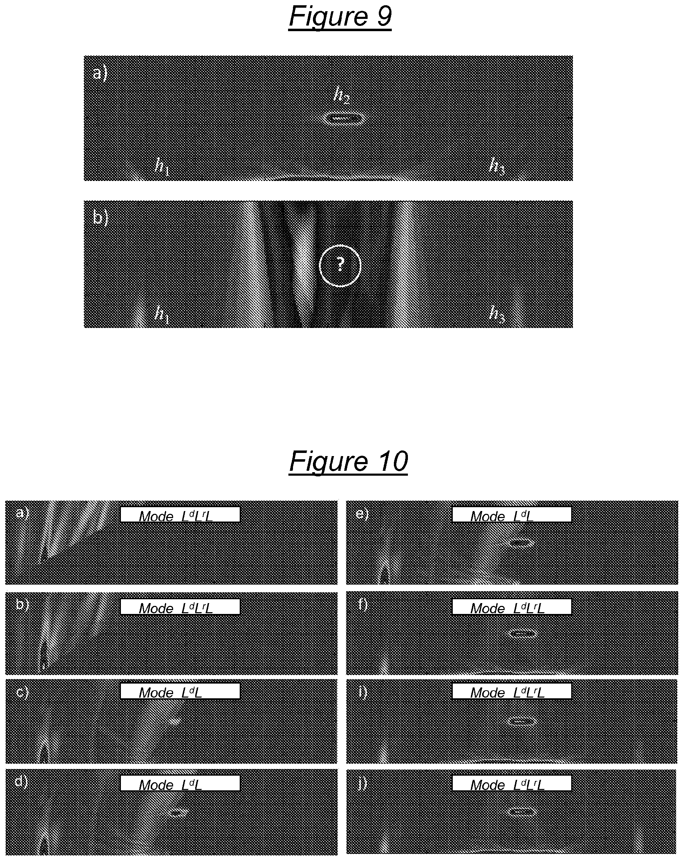

Un autre exemple d'application concrète du procédé précédemment décrit est illustré sur la figure 8. Cette application a fait l'objet de tests réels dont différents résultats seront commentés en référence aux figures 9 et 10.

La pièce inspectée 800 est en acier inoxydable et comporte trois défauts artificiels de type entailles. Deux entailles, $h_1$ et $h_3$, sont orientées perpendiculairement au réseau de transducteurs $108_1$, ..., $108_n$ et localisées au fond de la pièce inspectée 800 en dehors de l'ouverture du capteur formé par l'ensemble des transducteurs $108_1$, ..., $108_n$. Une troisième entaille, $h_2$, a une orientation parallèle au réseau de transducteurs $108_1$, ..., $108_n$ et est située au voisinage de la normale au capteur qu'ils forment. La profondeur de la pièce est H = 70 mm, le nombre N de transducteurs est égal à 64 (pas inter-transducteurs de 0,6 mm, fréquence centrale des ondes ultrasonores émises de 5 MHz), la pièce inspectée est au contact des transducteurs centrés sur l'entaille $h_2$. Les trois entailles ont une longueur de 10 mm.

Il est procédé à 31 émissions successives d'ondes ultrasonores planes d'angles d'émission variant de -60° à +60° (par rapport à la normale du capteur) par pas de 4°. Parmi ces 31 émissions successives, on dstingue : un premier groupe d'émissions orientées autour de -45°, plus précisément entre -60° et -30°, ce premier groupe visant un secteur angulaire dans lequel se trouve l'entaille $h_1$ ; un deuxième groupe d'émissions orientées autour de la normale (0°), plus généralement entre -30° et +30°, ce deuxième groupe visant un secteur angulaire dans lequel se trouve l'entaille $h_2$ ; et un troisième groupe d'émissions orientées autour de +45°, plus précisément entre +30° et +60°, ce troisième groupevisant un secteur angulaire dans lequel se trouve l'entaille $h_3$. La zone imagée est incluse dans l'union des zones d'émission et est identifiée par la référence Z.

Selon une première reconstitution possible de la zone imagée Z, le même mode de propagation en trajet direct et en ondes longitudinales est appliqué au traitement des signaux de mesure de tous les tirs ultrasonores. Ce mode est symbolisé par la notation $L^dL$, où « L » indique un sous-trajet rectiligne en polarisation longitudinale et « $^d$ » une interaction d'onde plane avec un défaut. D'une façon plus générale le mode de propagation en trajet direct est symbolisé par la notation $X^dX$, où « X » peut prendre la valeur « L » ou « T » (pour un sous-trajet rectiligne en polarisation transversale) sur chaque sous-trajet. La reconstitution avec le mode unique $L^dL$ fournit le résultat de la figure 9(a). L'entaille $h_2$ est imagée dans son intégralité, alors que les deux autres entailles $h_1$ et $h_3$ sont caractérisées chacune par un unique écho de diffraction, localisé en bas de chaque défaut. L'écho de diffraction du haut des entailles est en effet à peine visible dans les deux cas.

Selon une deuxième reconstitution possible de la zone imagée Z, le même mode de propagation en écho de coin et en ondes longitudinales est appliqué au traitement des signaux de mesure de tous les tirs ultrasonores. Ce mode est symbolisé par la notation $L^dL^rL$, où « $^r$ » indique une interaction d'onde plane avec le fond de la pièce inspectée. D'une façon plus générale le mode de propagation en écho de coin est symbolisé par la notation $X^dX^rX$, où « X » peut prendre la valeur « L » ou « T » sur chaque sous-trajet. La reconstitution avec le mode unique $L^dL^rL$ fournit le résultat de la figure 9(b). Les entailles $h_1$ et $h_3$ sont cette fois-ci bien visibles sur toute leur longueur, mais l'entaille $h_2$ est complètement masquée par un artéfact de reconstruction. Cet artéfact s'explique par la présence de l'écho de fond qui, lui, est un écho direct. Plus précisément, l'artéfact situé dans l'ouverture du capteur correspond au repositionnement de l'écho direct provenant du fond de la pièce inspectée à des temps de vol correspondant à des trajets en échos de coin. Il y a contradiction entre la nature de l'écho et le mode de reconstruction.

Selon une troisième reconstitution possible de la zone imagée Z, tirant profit des avantages des deux reconstitutions précédentes imparfaites :

- un premier mode de propagation $L^dL^rL$ est appliqué au traitement des signaux de mesure issus du premier groupe d'émissions comprises entre - 60° et -30°, ce mode de propagation étant adapté àla configuration de l'entaille $h_1$,
- un deuxième mode de propagation $L^dL$ est appliqué au traitement des signaux de mesure issus du deuxième groupe d'émissions comprises entre -30° et +30°, ce mode de propagation étant adapté àla configuration de l'entaille $h_2$, et
- un troisième mode de propagation $L^dL^rL$ est appliqué au traitement des signaux de mesure issus du troisième groupe d'émissions comprises entre +30° et +60°, ce mode de propagation étant adapté àla configuration de l'entaille $h_3$.

Cette troisième reconstitution fournit les résultats progressifs de la figure 10. La figure 10(a) illustre le résultat intermédiaire à l'issue du tir ultrasonore n°1 (-60°), alors que le mode de propagation choisi est $L^dL^rL$. La figure 10(b) illustre le résultat intermédiaire à l'issue du tir ultrasonore n°2 (-56°), alors que le mode de propagation choisi est toujours $L^dL^rL$. La figure 10(c) illustre le résultat intermédiaire à l'issue du tir ultrasonore n°9 (-28°), alors que le mode de propagation choisi est $L^dL$. La figure 10(d) illustre le résultat intermédiaire à l'issue du tir ultrasonore n°10 (-24°), alors que le mode de propagation choisi est toujours $L^dL$. La figure 10(e) illustre le résultat intermédiaire à l'issue du tir ultrasonore n°11 (-20°), alors que le mode de propagation choisi est toujours $L^dL$. La figure 10(f) illustre le résultat intermédiaire à l'issue du tir ultrasonore n°24 (+32°), alors que mode de propagation choisi est de nouveau $L^dL^rL$. La figure 10(i) illustre le résultat intermédiaire à l'issue du tir ultrasonore n°26 (+40°), alors que le mode de propagation choisi est toujours $L^dL^rL$. Enfin, la figure 10(j) illustre le résultat final à l'issue du tir ultrasonore n°31 (+60°), alors que le mode de propagation choisi est toujours $L^dL^rL$.

L'image 10(j) est à comparer aux images 9(a) et 9(b). La visibilité des trois entailles y est nettement supérieure et ce, grâce à la possibilité qu'offre un procédé selon l'invention d'adapter le mode de propagation choisi lors de la reconstruction en fonction de l'angle d'émission des tirs ultrasonores successifs.

Il apparaît clairement qu'un procédé et un dispositif tels que ceux détaillés ci-dessus permettent de procéder à un nombre de tirs inférieur à celui nécessaire dans les méthodes de focalisation en tous points pour une qualité équivalente de l'image finalement obtenue ou d'atteindre de meilleures performances en termes de qualité d'image pour un nombre de tirs équivalent. La principale raison de cette amélioration, i.e. une cadence plus élevée ou une meilleure qualité d'image, c'est qu'à chaque tir, l'ensemble des transducteurs d'émission sont sollicités.

En outre, le procédé proposé reste compatible avec des géométries ou matériaux complexes et permet de fusionner plusieurs modes de propagation au sein d'une même image, en fonction de l'angle de tir. Des images s'étendant au-delà de l'ouverture du capteur peuvent aussi être obtenues.

Dans le cas d'une reconstitution progressive de l'image, angle par angle, tel que cela est rendu possible par l'invention, le rendu est finalement amélioré.

Enfin, les tests expérimentaux montrent que l'amplitude de détection est nettement plus élevée avec un procédé selon l'invention qu'avec une méthode de focalisation en tous points classique. Lors d'études comparatives, il a pu être montré un facteur 10 sur ce point entre les deux méthodes. La raison de cette différence est encore la sollicitation de tous les transducteurs d'émission à chaque tir.

On notera par ailleurs que l'invention n'est pas limitée au mode de réalisation décrit précédemment. Il apparaîtra en effet à l'homme de l'art que diverses modifications peuvent être apportées au mode de réalisation décrit ci-dessus, à la lumière de l'enseignement qui vient de lui être divulgué.

En particulier, les instructions de programme d'ordinateur pourraient être remplacées par des circuits électroniques dédiés aux fonctions réalisées lors de l'exécution de ces instructions.

D'une façon générale, dans les revendications qui suivent, les termes utilisés ne doivent pas être interprétés comme limitant les revendications au mode de réalisation exposé dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en œuvre de l'enseignement qui vient de lui être divulgué.

## Revendications

1. Procédé (600) de traitement de signaux (S) issus d'une acquisition par sondage ultrasonore comportant les étapes suivantes :

   - commande (602) d'un réseau de M transducteurs d'émission ($108_1$, ..., $108_N$) pour L émissions successives d'ondes ultrasonores planes présentant L angles d'émission successifs différents ($\theta_1$, ..., $\theta_L$) dans L zones d'émission ($ZE_1$, ..., $ZE_L$),
   - commande (602) d'un réseau de N transducteurs de réception ($108_1$, ..., $108_N$) de manière à recevoir (604) simultanément et pendant une durée prédéterminée, pour chaque émission, N signaux temporels de mesure, mesurant en particulier des échos dus à des réflexions de l'émission considérée,
   - reconstitution (606, 608, 610, 612, 614, 616) d'une zone imagée par calcul, en chaque point (P) d'une pluralité de points prédéterminés de cette zone imagée, d'une valeur résultant d'un traitement d'au moins une partie des LxN signaux temporels de mesure reçus,

   **caractérisé en ce que** la reconstitution de la zone imagée comporte les étapes suivantes, exécutées par un processeur (114) pour chaque point (P) de la zone imagée :

   - détermination (608) de L' émissions, L' ≤ L, parmi les L émissions successives, dont les zones d'émission ($ZE_1$, ..., $ZE_L$) incluent le point considéré (P),
   - calcul (608) de L'xN temps de vol, chaque temps de vol $t_{l,n}$ étant le temps mis par la l-ième onde plane dont la zone d'émission inclut le point considéré, où $1 \leq l \leq L'$, pour être reçue par le n-ième transducteur de réception, où $1 \leq n \leq N$, en passant par le point considéré (P) selon un mode de propagation prédéterminé, et
   - sommation cohérente (610, 612) de L'xN valeurs instantanées prises respectivement, par les L'xN signaux temporels de mesure reçus correspondant aux L' émissions déterminées, aux L'xN temps de vol calculés.

2. Procédé (600) de traitement de signaux ultrasonores selon la revendication 1, dans lequel les transducteurs d'émission ($108_1$, ..., $108_N$) sont commandés à l'aide d'une loi de retards ($T_1$, ..., $T_L$) définie pour chacune des L émissions successives d'ondes ultrasonores planes, chaque loi de retards permettant d'engendrer une onde ultrasonore plane à un angle d'émission souhaité parmi les L angles d'émission successifs différents ($\theta_1$, ..., $\theta_L$).

3. Procédé (600) de traitement de signaux ultrasonores selon la revendication 1 ou 2, dans lequel M = N et les transducteurs ($108_1$, ..., $108_N$) sont séquentiellement émetteurs et récepteurs.

4. Procédé (600) de traitement de signaux ultrasonores selon l'une quelconque des revendications 1 à 3, dans lequel les L angles d'émission successifs différents ($\theta_1$, ..., $\theta_L$) sont définis autour d'une direction moyenne ($\theta_{(L+1)/2}$) non perpendiculaire au réseau de transducteurs d'émission ($108_1$, ..., $108_N$).

5. Procédé (600) de traitement de signaux ultrasonores selon l'une quelconque des revendications 1 à 4, dans lequel, pour chaque émission, c'est-à-dire pour chaque angle d'émission, le mode de propagation prédéterminé est choisi parmi l'un des modes suivants :

- un mode de propagation en trajet direct, avec ou sans conversion de mode Longitudinal↔Transversal, selon lequel l'onde plane émise est directement reçue par chaque point (P) de la zone imagée et directement retournée vers les transducteurs de réception $(108_1, ..., 108_N)$ sans autre réflexion,

- un mode de propagation en écho de coin, avec ou sans conversions de mode Longitudinal↔Transversal, selon lequel l'onde émise subit une réflexion (R) sur une surface prédéterminée de la zone imagée, soit entre les transducteurs d'émission $(108_1, ..., 108_N)$ et chaque point (P) de la zone imagée, soit entre chaque point (P) de la zone imagée et les transducteurs de réception $(108_1, ..., 108_N)$, et

- un mode de propagation en trajet indirect, avec ou sans conversions de mode Longitudinal↔Transversal, selon lequel l'onde émise subit au moins deux réflexions (R) contre au moins une surface prédéterminée de la zone imagée, au moins une fois entre les transducteurs d'émission $(108_1, ..., 108_N)$ et chaque point (P) de la zone imagée et une autre fois entre chaque point (P) de la zone imagée et les transducteurs de réception $(108_1, ..., 108_N)$.

6. Procédé (600) de traitement de signaux ultrasonores selon l'une quelconque des revendications 1 à 5, dans lequel la zone imagée est incluse dans l'union des L zones d'émission $(ZE_1, ..., ZE_L)$, sa reconstitution comportant les étapes successives suivantes :

- initialisation (606) de chaque point de la zone imagée à une valeur nulle,
- pour toute valeur d'un indice l variant de 1 à L et pour chaque point (P) situé dans l'intersection de la zone imagée et de la l-ième zone d'émission :

  • calcul (608) des N temps de vol $t_{l,n}$,
  • sommation (610) cohérente des N valeurs instantanées prises respectivement, par les N signaux temporels de mesure reçus en réponse à la l-ième émission, aux N temps de vol calculés, et
  • ajout (612) du résultat de cette sommation cohérente à la valeur du point considéré,

- calcul (616) du module de la valeur finalement obtenue en chaque point de la zone imagée.

7. Procédé (600) de traitement de signaux ultrasonores selon l'une quelconque des revendications 1 à 6, dans lequel, pour chaque émission, une apodisation des M signaux ultrasonores émis par les M transducteurs d'émission $(108_1, ..., 108_N)$ pour former une onde ultrasonore plane est réalisée à l'aide d'une fenêtre d'apodisation telle qu'une loi d'amplitude trapézoïdale, de Hamming ou de Blackman-Harris.

8. Procédé (600) de traitement de signaux ultrasonores selon l'une quelconque des revendications 1 à 7, dans lequel la zone imagée prend la forme d'une zone sectorielle délimitée par les extrémités des zones d'émission $(ZE_1, ZE_L)$ d'angles maximal et minimal.

9. Programme d'ordinateur (118) téléchargeable depuis un réseau de communication et/ou enregistré sur un support lisible par ordinateur et/ou exécutable par un processeur (114), **caractérisé en ce qu'**il comprend des instructions (120, 124, 126, 128) qui conduisent le dispositif selon la revendication 10 à exécuter les étapes du procédé selon l'une quelconque des revendications 1 à 8.

10. Dispositif (100) de sondage à ultrasons comportant :

- une sonde (104) comprenant M transducteurs d'émission à ultrasons $(108_1, ..., 108_N)$ et N transducteurs de réception à ultrasons $(108_1, ..., 108_N)$,
- des moyens (112) de commande des M transducteurs d'émission pour L émissions successives d'ondes ultrasonores planes présentant L angles d'émission successifs différents $(\theta_1, ..., \theta_L)$ dans L zones d'émission $(ZE_1, ..., ZE_L)$,
- des moyens (112) de commande des N transducteurs de réception de manière à recevoir simultanément et pendant une durée prédéterminée, pour chaque émission, N signaux temporels de mesure, mesurant en particulier des échos dus à des réflexions de l'émission considérée, et
- un processeur (114) de reconstitution d'une zone imagée par calcul, en chaque point (P) d'une pluralité de points prédéterminés de cette zone imagée, d'une valeur résultant d'un traitement d'au moins une partie des LxN signaux temporels de mesure reçus,

**caractérisé en ce que** le processeur (114) est en outre configuré pour effectuer les traitements suivants pour chaque point (P) de la zone imagée :

- détermination de L' émissions, L' ≤ L, parmi les L émissions successives, dont les zones d'émission ($ZE_1$, ..., $ZE_L$) incluent le point considéré (P),
- calcul de L'xN temps de vol, chaque temps de vol $t_{l,n}$ étant le temps mis par la l-ième onde plane dont la zone d'émission inclut le point considéré, où $1 \le l \le L'$, pour être reçue par le n-ième transducteur de réception, où $1 \le n \le N$, en passant par le point considéré (P) selon un mode de propagation prédéterminé, et
- sommation cohérente de L'xN valeurs instantanées prises respectivement, par les L'xN signaux temporels de mesure reçus correspondant aux L' émissions déterminées, aux L'xN temps de vol calculés.

**Patentansprüche**

1. Verfahren (600) zur Verarbeitung von Signalen (S) aus einer Ultraschallsondierungserfassung, die folgenden Schritte beinhaltend:

   - Steuern (602) eines Netzes von M Sendewandlern ($108_1$, ..., $108_N$) für L aufeinanderfolgende Sendungen von ebenen Ultraschallwellen, die L verschiedene aufeinanderfolgende Sendewinkel ($\theta_1$, ..., $\theta_L$) in L Sendebereichen ($ZE_1$, ..., $ZE_L$) aufweisen,
   - Steuern (602) eines Netzes von N Empfangswandlern ($108_1$, ..., $108_N$), um gleichzeitig und eine vorbestimmte Dauer lang bei jeder Sendung N zeitbasierte Messsignale zu empfangen (604), die insbesondere Echos messen, die auf Reflexionen der betrachteten Sendung zurückzuführen sind,
   - Wiederherstellen (606, 608, 610, 612, 614, 616) eines Bildbereichs durch Berechnung, an jedem Punkt (P) einer Vielzahl von vorbestimmten Punkten dieses Bildbereichs, eines resultierenden Wertes einer Verarbeitung mindestens eines Teils der LxN empfangenen zeitbasierten Messsignale,

   **dadurch gekennzeichnet, dass** das Wiederherstellen des Bildbereichs die folgenden Schritte beinhaltet, die von einem Prozessor (114) für jeden Punkt (P) des Bildbereichs ausgeführt werden:

   - Bestimmen (608) von L' Sendungen, mit L' ≤ L, aus den L aufeinanderfolgenden Sendungen, deren Sendebereiche ($ZE_1$, ..., $ZE_L$) den betrachteten Punkt (P) beinhalten,
   - Berechnen (608) von L'xN Flugzeiten, wobei jede Flugzeit $t_{l,n}$ die Zeit ist, die die l-te ebene Welle, deren Sendebereich den betrachteten Punkt beinhaltet, mit $1 \le l \le L'$, benötigt, um, samt Durchlauf durch den betrachteten Punkt (P) gemäß einem vorbestimmten Ausbreitungsmodus, von dem n-ten Empfangswandler empfangen zu werden, mit $1 \le n \le N$, und
   - kohärentes Aufsummieren (610, 612) von L'xN augenblicklichen Werten, die jeweils von den empfangenen L'xN zeitbasierten Messsignalen angenommen werden, die den L' bestimmten Sendungen entsprechen, auf die L'xN berechneten Flugzeiten.

2. Verfahren (600) zur Verarbeitung von Ultraschallsignalen nach Anspruch 1, wobei die Sendewandler ($108_1$, ..., $108_N$) mithilfe eines Verzögerungsgesetzes ($T_1$, ..., $T_L$) gesteuert werden, das für jede der L aufeinanderfolgenden Sendungen ebener Ultraschallwellen definiert wird, wobei jedes Verzögerungsgesetz erlaubt, eine ebene Ultraschallwelle in einem gewünschten Sendewinkel aus den L verschiedenen aufeinanderfolgenden Sendewinkeln ($\theta_1$, ..., $\theta_L$) zu erzeugen.

3. Verfahren (600) zur Verarbeitung von Ultraschallsignalen nach Anspruch 1 oder 2, wobei M = N, und die Wandler ($108_1$, ..., $108_N$) sequenziell Sender und Empfänger sind.

4. Verfahren (600) zur Verarbeitung von Ultraschallsignalen nach einem der Ansprüche 1 bis 3, wobei die L verschiedenen aufeinanderfolgenden Sendewinkel ($\theta_1$, ..., $\theta_L$) um eine durchschnittliche Richtung ($\theta_{(L+1)/2}$) herum definiert werden, die nicht senkrecht zum Netz von Sendewandlern ($108_1$, ..., $108_N$) steht.

5. Verfahren (600) zur Verarbeitung von Ultraschallsignalen nach einem der Ansprüche 1 bis 4, wobei der vorbestimmte Ausbreitungsmodus für jede Sendung, das heißt für jeden Sendewinkel, aus einem der folgenden Modi ausgewählt wird:

   - einem Ausbreitungsmodus auf direkter Strecke, mit oder ohne Modus-Umwandlung Längs ↔ Quer, bei dem die gesendete ebene Welle von jedem Punkt (P) des Bildbereichs direkt empfangen wird, und direkt, ohne weitere Reflexion, zu den Empfangswandlern ($108_1$, ..., $108_N$) zurückgeschickt wird,
   - einem Ausbreitungsmodus mit Winkelecho, mit oder ohne Modus-Umwandlung Längs ↔ Quer, bei dem die gesendete Welle eine Reflexion (R) auf einer vorbestimmten Oberfläche des Bildbereichs, entweder zwischen den Sendewandlern ($108_1$, ..., $108_N$) und jedem Punkt (P) des Bildbereichs, oder zwischen jedem Punkt (P) des Bildbereichs und den Empfangswandlern ($108_1$, ..., $108_N$), erfährt, und

- einem Ausbreitungsmodus auf indirekter Strecke, mit oder ohne Modus-Umwandlung Längs ↔ Quer, bei dem die gesendete Welle mindestens zwei Reflexionen (R) gegen mindestens eine vorbestimmte Oberfläche des Bildbereichs, mindestens einmal zwischen den Sendewandlern ($108_1$, ..., $108_N$) und jedem Punkt (P) des Bildbereichs, und ein anderes Mal zwischen jedem Punkt (P) des Bildbereichs und den Empfangswandlern ($108_1$, ..., $108_N$), erfährt.

6.  Verfahren (600) zur Verarbeitung von Ultraschallsignalen nach einem der Ansprüche 1 bis 5, wobei der Bildbereich in der Vereinigung der L Sendebereiche ($ZE_1$, ..., $ZE_L$) beinhaltet ist, wobei deren Wiederherstellung die folgenden aufeinanderfolgenden Schritte beinhaltet:

    - Initialisieren (606) jedes Punktes des Bildbereichs auf einen Nullwert,
    - für jeden Wert eines Index I, der von 1 bis L variiert, und für jeden Punkt (P), der sich an der Schnittlinie des Bildbereichs und des I-ten Sendebereichs befindet:

        • Berechnen (608) der N Flugzeiten $t_{l,n}$,
        • kohärentes Aufsummieren (610) der N augenblicklichen Werte, die jeweils von den empfangenen N zeitbasierten Messsignalen angenommen werden, als Reaktion auf die I-te Sendung, auf die berechneten N Flugzeiten, und
        • Hinzufügen (612) des Ergebnisses dieser kohärenten Aufsummierung zu dem Wert des betrachteten Punktes,

    - Berechnen (616) des Moduls des letztendlich erhaltenen Wertes an jedem Punkt des Bildbereichs.

7.  Verfahren (600) zur Verarbeitung von Ultraschallsignalen nach einem der Ansprüche 1 bis 6, wobei für jede Sendung eine Apodisation der M Ultraschallsignale, die durch die M Sendewandler ($108_1$, ..., $108_N$) gesendet werden, um eine ebene Ultraschallwelle zu bilden, mithilfe eines Apodisationsfensters, in der Art eines trapezförmigen Amplitudengesetzes, von Hamming oder von Blackman-Harris durchgeführt wird.

8.  Verfahren (600) zur Verarbeitung von Ultraschallsignalen nach einem der Ansprüche 1 bis 7, wobei der Bildbereich die Form eines sektoralen Bereichs annimmt, der durch die Enden der Sendebereiche ($ZE_1$, ..., $ZE_L$) mit maximalem und minimalem Winkel begrenzt wird.

9.  Computerprogramm (118), das von einem Kommunikationsnetz heruntergeladen und/oder auf einem von einem Computer lesbaren Support gespeichert werden kann und/oder durch einen Prozessor (114) ausführbar ist, **dadurch gekennzeichnet, dass** es Anweisungen (120, 124, 126, 128) umfasst, die die Vorrichtung nach Anspruch 10 dazu bringen, die Schritte des Verfahrens nach einem der Ansprüche 1 bis 8 auszuführen.

10. Vorrichtung (100) zur Ultraschallsondierung, Folgendes beinhaltend:

    - eine Sonde (104), die M Ultraschall-Sendewandler ($108_1$, ..., $108_N$) und N Ultraschall-Empfangswandler ($108_1$, ..., $108_N$) umfasst,
    - Mittel (112) zum Steuern der M Sendewandler für L aufeinanderfolgende Sendungen von ebenen Ultraschallwellen, die L verschiedene aufeinanderfolgende Sendewinkel ($\theta_1$, ..., $\theta_L$) in L Sendebereichen ($ZE_1$, ..., $ZE_L$) aufweisen,
    - Mittel (112) zum Steuern der N Empfangswandler, um gleichzeitig und eine vorbestimmte Dauer lang bei jeder Sendung N zeitbasierte Messsignale zu empfangen, die insbesondere Echos messen, die auf Reflexionen der betrachteten Sendung zurückzuführen sind, und
    - einen Prozessor (114) zum Wiederherstellen eines Bildbereichs durch Berechnung, an jedem Punkt (P) einer Vielzahl von vorbestimmten Punkten dieses Bildbereichs, eines resultierenden Wertes einer Verarbeitung mindestens eines Teils der LxN empfangenen zeitbasierten Messsignale,

    **dadurch gekennzeichnet, dass** der Prozessor (114) weiter konfiguriert ist, um die folgenden Verarbeitungen für jeden Punkt (P) des Bildbereichs durchzuführen:

    - Bestimmen von L' Sendungen, mit L' $\leq$ L, aus den L aufeinanderfolgenden Sendungen, deren Sendebereiche

(ZE$_1$, ..., ZE$_L$) den betrachteten Punkt (P) beinhalten,
- Berechnen von L'xN Flugzeiten, wobei jede Flugzeit t$_{l,n}$ die Zeit ist, die die l-te ebene Welle, deren Sendebereich den betrachteten Punkt beinhaltet, mit $1 \leq l \leq L'$, benötigt, um, samt Durchlauf durch den betrachteten Punkt (P) gemäß einem vorbestimmten Ausbreitungsmodus, von dem n-ten Empfangswandler empfangen zu werden, mit $1 \leq n \leq N$, und
- kohärentes Aufsummieren von L'xN augenblicklichen Werten, die jeweils von den empfangenen L'xN zeitbasierten Messsignalen angenommen werden, die den L' bestimmten Sendungen entsprechen, auf die L'xN berechneten Flugzeiten.

## Claims

1. A method (600) for processing signals (S) from an ultrasound probe acquisition including the following steps:

    - control (602) of an array of M emission transducers (108$_1$, ..., 108$_N$) for L successive emissions of ultrasound plane waves having L different successive emission angles ($\theta_1$, ..., $\theta_L$) in L emission zones (ZE$_1$, ..., ZE$_L$),
    - control (602) of an array of N reception transducers (108$_1$, ..., 108$_N$) so as to simultaneously receive (604) for a predetermined duration, for each emission, N measurement time signals, measuring, in particular, echoes due to reflections of the emission considered,
    - reconstitution (606, 608, 610, 612, 614, 616) of an imaged zone by calculating, at each point (P) of a plurality of predetermined points of said imaged zone, a value resulting from a processing of at least some of the LxN measurement time signals received,

    **characterized in that** the reconstitution of the imaged zone includes the following steps, performed by a processor (114) for each point (P) of the imaged zone:

    - determination (608) of L' emissions, $L' \leq L$, among the L successive emissions, of which the emission zones (ZE$_1$, ..., ZE$_L$) include the point considered (P),
    - calculation (608) of L'xN flight times, each flight time t$_{l,n}$ being the time taken for the l-th plane wave, the emission zone of which includes the point considered, where $1 \leq l \leq L'$, to be received by the n-th reception transducer, where $1 \leq n \leq N$, passing through the point (P) considered according to a predetermined propagation mode, and
    - coherent summing (610, 612) of L'xN instantaneous values taken respectively, by the L'xN measurement time signals received corresponding to the L' emissions determined, at the L'xN flight times calculated.

2. The method (600) for processing ultrasound signals according to claim 1, wherein the emission transducers (108$_1$, ..., 108$_N$) are controlled by means of a delay law (T$_1$, ..., T$_L$) defined for each of the successive L emissions of ultrasound plane waves, each delay law making it possible to generate an ultrasound plane wave at a desired emission angle among the L different successive emission angles ($\theta_1$, ..., $\theta_L$).

3. The method (600) for processing ultrasound signals according to claim 1 or 2, wherein M = N and the transducers (108$_1$, ..., 108$_N$) are sequentially emitters and receivers.

4. The method (600) for processing ultrasound signals according to any one of claims 1 to 3, wherein the L different successive emission angles ($\theta_1$, ..., $\theta_L$) are defined around a mean direction ($\theta_{(L+1)/2}$) not perpendicular to the emission transducer array (108$_1$, ..., 108$_N$).

5. The method (600) for processing ultrasound signals according to any one of claims 1 to 4, wherein, for each emission, i.e. for each emission angle, the predetermined propagation mode is chosen from one of the following modes:

    - a direct-path propagation mode, with or without Longitudinal↔Transversal mode conversion, according to which the plane wave emitted is received directly by each point (P) of the imaged zone and directly returned to the reception transducers (108$_1$, ..., 108$_N$) without any other reflection,
    - a corner echo propagation mode, with or without Longitudinal↔Transversal mode conversions, according to which the wave emitted undergoes a reflection (R) on a predetermined surface of the imaged zone, either between the emission transducers (108$_1$, ..., 108$_N$) and each point (P) of the imaged zone or between each point (P) of the imaged zone and the reception transducers (108$_1$, ..., 108$_N$), and
    - an indirect-path propagation mode, with or without Longitudinal↔Transversal mode conversion, according to which the wave emitted undergoes at least two reflections (R) against at least one predetermined surface of the imaged zone, at least once between the emission transducers ($108_1$, ..., $108_N$) and each point (P) of the imaged zone and one other time between each point (P) of the imaged zone and the reception transducers ($108_1$, ..., $108_N$).

**6.** The method (600) for processing ultrasound signals according to any one of claims 1 to 5, wherein the imaged zone is included in the union of the L emission zones ($ZE_1$, ..., $ZE_L$), its reconstitution including the following successive steps:

- resetting (606) of each point of the imaged zone at a zero value,
- for any value of an index l ranging from 1 to L and for each point (P) located in the intersection of the imaged zone and the l-th emission zone:

   • calculation (608) of the N flight times $t_{l,n}$,
   • coherent summing (610) of the N instantaneous values taken, respectively, by the N measurement time signals received in response to the l-th emission, at the N calculated flight times, and
   • addition (612) of the result of said coherent summing to the value of the point considered,

- calculation (616) of the modulus of the value finally obtained at each point of the imaged zone.

**7.** The method (600) for processing ultrasound signals according to any one of claims 1 to 6, wherein, for each emission, an apodization of the M ultrasound signals emitted by the M emission transducers ($108_1$, ..., $108_N$) in order to form an ultrasound plane wave is performed by means of an apodization window such as a trapezoidal, Hamming or Blackman-Harris amplitude law.

**8.** The method (600) for processing ultrasound signals according to any one of claims 1 to 7, wherein the imaged zone takes the form of a sectorial zone delimited by the ends of the emission zones ($ZE_1$, $ZE_L$) of maximum and minimum angles.

**9.** A computer program (118) downloadable from a communication network and/or recorded on a computer-readable medium and/or capable of being run by a processor (114), **characterized in that** it includes instructions (120, 124, 126, 128) that lead the device according to claim 10 to execute the steps of the method according to any one of claims 1 to 8.

**10.** An ultrasound probe device (100) including:

- a probe (104) including M ultrasound emission transducers ($108_1$, ..., $108_N$) and N ultrasound reception transducers ($108_1$, ..., $108_N$),
- means (112) for controlling the M emission transducers for L successive emissions of ultrasound plane waves having L different successive emission angles ($\theta_1$, ..., $\theta_L$) in L emission zones ($ZE_1$, ..., $ZE_L$),
- means (112) controlling the N reception transducers so as to simultaneously receive, for a predetermined period, for each emission, N measurement time signals, measuring, in particular, echoes due to reflections of the emission considered, and
- a processor (114) for reconstituting an imaged zone by calculating, at each point (P) of a plurality of predetermined points of said imaged zone, a value resulting from a processing of at least some of the LxN measurement time signals received,

**characterized in that** the processor (114) is further configured to perform the following processing operations for each point (P) of the imaged zone:

- determination of L' emissions, $L' \leq L$, among the L successive emissions, of which the emission zones ($ZE_1$, ..., $ZE_L$) include the point considered (P),
- calculation of L'xN flight times, each flight time $t_{l,n}$ being the time taken for the l-th plane wave, the emission zone of which includes the point considered, where $1 \leq l \leq L'$, to be received by the n-th reception transducer, where $1 \leq n \leq N$, passing through the point (P) considered according to a predetermined propagation mode, and
- coherent summing of L'xN instantaneous values taken, respectively, by the L'xN measurement time signals received corresponding to the L' emissions determined, at the L'xN flight times calculated.

# Figure 1

## Figure 2

## Figure 3

## Figure 4

## Figure 5

## Figure 6

## Figure 7

## Figure 8

## Figure 9

## Figure 10

## RÉFÉRENCES CITÉES DANS LA DESCRIPTION

**Littérature non-brevet citée dans la description**

- **C. HOLMES et al.** Post-processing of the full matrix of ultrasonic transmit-receive array data for non-destructive evaluation. *NDT&E International,* 15 Juin 2005, vol. 38, 701-711
- **A. FIDAHOUSSEN et al.** Imaging of defects in several complex configurations by simulation-helped processing of ultrasonic array data. *Review of Quantitative Nondestructive Evaluation,* 2009, vol. 29, 847-854
- **M. KARAMAN et al.** Synthetic aperture imaging for small scale systems. *IEEE Transactions on Ultrasonics, Ferroelectrics, and Frequency Control,* Mai 1995, vol. 42 (3), 429-442
- **G. MONTALDO et al.** Coherent plane-wave compounding for very high frame rate ultrasonography and transient elastography. *IEEE Transactions on Ultrasonics Ferroelectrics and Frequency Control,* Mars 2009, vol. 56 (3), 489-506
- Adaptive compounding of synthetic aperture and compounded plane-wave imaging for fast ultrasonography. **K. KOTOWICK.** PROCEEDINGS - INTERNATIONAL SYMPOSIUM ON BIOMEDICAL IMAGING - ISBI 2013 - 2013 IEEE 10TH INTERNATIONAL SYMPOSIUM ON BIOMEDICAL IMAGING: FROM NANO TO MACRO 2013. IEEE COMPUTER SOCIETY, 11 Avril 2013, 784-787